## Europäisches Patentamt
## European Patent Office
## Office européen des brevets

(19)

(11) Veröffentlichungsnummer: **0 174 968**
**B1**

(12)
# EUROPÄISCHE PATENTSCHRIFT

(45) Veröffentlichungstag der Patentschrift:
**26.08.87**

(51) Int. Cl.⁴: **E 03 F 1/00,** E 03 F 5/16,
E 03 F 5/10, B 01 D 21/02

(21) Anmeldenummer: **85901355.9**

(22) Anmeldetag: **07.03.85**

(86) Internationale Anmeldenummer:
**PCT/DE 85/00071**

(87) Internationale Veröffentlichungsnummer:
**WO 85/04204 (26.09.85** Gazette 85/21)

(54) **ANLAGE ZUR BEHANDLUNG VON STRASSENABWÄSSERN.**

(30) Priorität: **17.03.84 DE 3409870**
**06.07.84 DE 3424854**

(43) Veröffentlichungstag der Anmeldung:
**26.03.86 Patentblatt 86/13**

(45) Bekanntmachung des Hinweises auf die Patenterteilung:
**26.08.87 Patentblatt 87/35**

(84) Benannte Vertragsstaaten:
**AT CH DE FR GB LI LU NL**

(56) Entgegenhaltungen:
**EP - A - 0 048 158**
**DE - A - 2 917 883**
**DE - A - 2 928 701**
**FR - A - 2 429 297**

(73) Patentinhaber: **KAPPLER, Günter, Drosselweg 5,**
**D-7987 Weingarten (DE)**

(72) Erfinder: **KAPPLER, Günter, Drosselweg 5,**
**D-7987 Weingarten (DE)**

(74) Vertreter: **Patentanwälte Dipl.-Ing. E. Eisele Dr.-Ing. H.**
**Otten, Seestrasse 42, D-7980 Ravensburg (DE)**

# Beschreibung

Die Erfindung betrifft eine Anlage zur Behandlung von Abwässern von Strassenverkehrsflächen.

Mit dem Bau und Betrieb von befestigten Strassenverkehrsflächen wird zwangsläufig in den natürlichen Wasserkreislauf eingegriffen. Untersuchungen über die Beschaffenheit von Strassenoberflächenwasser haben ergeben, dass dieses infolge von Verunreinigungen vom Kraftfahrzeugverkehr sowie von niedergehendem Staub und Regen verunreinigt sind. Gemäss den Richtlinien für bautechnischen Massnahmen an Strassen in Wassergewinnungsgebieten – RiStWag – Ausgabe 82, herausgegeben von der Forschungsgesellschaft für Strassen- und Verkehrswesen, Arbeitsgruppe Erd- und Grundbau, ist es insbesondere in Wassergewinnungsgebieten erforderlich, das von Strassenflächen abfliessende Abwasser in einer vertretbaren Weise zu behandeln.

Die hierfür bekannten Anlagen zur Behandlung von Strassenabwässern werden in Ortbeton- bzw. Erdbauweise als offene Becken hergestellt. Diese Anlagen haben den Nachteil, dass sie einen hohen Platzbedarf durch die offenen Becken erfordern, d. h. die erforderliche Grundfläche muss vom Bauträger käuflich erworben werden. Weiterhin ist es notwendig, das gesamte Areal zu umzäunen, um den Zutritt durch Unbefugte zu verhindern sowie Unfälle, z. B. Ertrinken, zu vermeiden. Im Winter besteht bei derartigen bekannten Anlagen die Gefahr der Eisbildung bei länger anhaltendem Frost, so dass bei einem auftretenden Ölunfall die Anlage nicht mehr funktionsfähig ist. Ein weiterer Nachteil derartiger Anlagen liegt in der Schlammablagerung im Trockenbereich der Becken, die bei längerem Stillstand der Becken zu Fäulnisbildung und somit zu Geruchsbelästigungen führen. Die Wartung und Instandhaltung sowohl der Becken, z. B. die Austragung des anfallenden Schlamms, sowie der eingezäunten Flächen, z. B. Mähen der Grünflächen, sind arbeitsintensiv und damit kostenintensiv. Als Nachteil ist weiterhin anzusehen, dass der vorhandene Dauerstau im Becken von der Tierwelt als Biotop angenommen wird, so dass bei einem auftretenden Ölunfall ein mehr oder weniger grosses Tiersterben eintreten kann. Ein vorhandener Dauerstau kann weiterhin infolge hoher Verdunstungsraten bis zur Unterkante der Tauchwand absinken, so dass bei einem Ölunfall ein Teil des Mineralöls unter der Tauchwand hindurch direkt in den Vorfluter gelangen kann.

Zur Vermeidung einiger der oben genannten Nachteile könnte eine mögliche Alternativbauweise eine Abdeckung dieser bekannten Anlage vorsehen. Da sich derartige Anlagen in den Dimensionen von ca. 20 bis 60 m Länge, 6 bis 12 m Breite sowie 0,7 bis 2,5 m Tiefe bewegen, jeweils bezogen auf eine angenommene Einzugsgebietsfläche, würden bei einer Ortbetonweise unverhältnismässig hohe Kosten entstehen, d. h. reine Betonbecken in geschlossener Bauweise stehen in keinem wirtschaftlichen Verhältnis zu den anfallenden Baukosten.

Der Erfindung liegt die Aufgabe zugrunde, die vorgenannten Nachteile zu vermeiden und insbesondere eine Anlage zu schaffen, bei welcher eine kostengünstige Lösung mit herkömmlichen Fertigteilprodukten geschaffen wird.

Diese Aufgabe wird durch den kennzeichnenden Teil des Anspruchs 1 gelöst. Die Ausbildung der Anlage nach dem Nebenanspruch 8 dient der Lösung von Teilproblemen.

Die Erfindung basiert auf folgenden Grundkriterien und Vorteilen: Durch die erdüberdeckte Bauweise mit einem Minimum an Platzbedarf können öffentliche Flächen wie Parkplätze o. dgl. als Baugrundstück herangezogen werden. Derartige Anlagen können auch auf Privatgrundstücken errichtet werden, ohne dass der Nutzen des Grundstücks erheblich beeinträchtigt wird. Insbesondere ist die Funktionstüchtigkeit der Anlage bei Frost gegeben. Eine Geruchsbelästigung sowie eine kostenintensive Wartung scheidet aus. Die Becken können durch maschinelles Räumen (Hochdruckreinigung) bzw. Spülen und Absaugen des Schlammwassergemisches gesäubert werden. Insbesondere lassen sich die Kosten durch Verwendung von Fertigteilprodukten erheblich senken.

Die erfindungsgemässe Lösung beruht massgeblich u. a. auf der Ausbildung des Turms (gemäss Anspruch 1 bis 3 und 8) als Ölabscheidestation. Zum einen sind gerade die Kosten der Herstellung derartiger Bauwerke in Ortbetonbauweise sehr hoch. Zum anderen bringt die spezielle konstruktive Ausführung des Turms für die erfindungsgemässe Aufgabe erhebliche Vorteile mit sich, da die zylindrische Formgebung einerseits ein optimales Strömungsbild bei grossen, schnell in den Turm einströmenden Wassermengen ergibt (im Gegensatz zu einer ebenen Tauchwand). Andererseits wird die bei vorgegebenem Wasserdurchsatz erforderliche Tauchwandlänge, bei vorgeschriebener maximaler Durchflussgeschwindigkeit mit kleinstem Platzbedaf, d. h. durch eine kreisförmige Tauchwand erzielt.

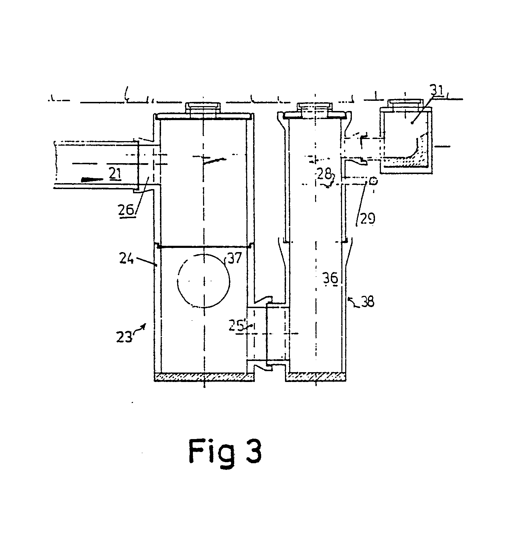

Bei Ausbildung des Turms als konzentrische Zylinder sind für den äusseren Ölsammelturm bei grösseren Anlagen grosse Durchmesser erforderlich, was die Herstellungskosten der als Schleuderbetonrohre ausgebildeten Rohre stark erhöht. In diesem Fall sieht die Erfindung alternativ vor, dass der Ölsammelturm und der Ablaufturm nicht konzentrisch, sondern nebeneinander angeordnet sind (Fig. 3).

Durch die in den Unteransprüchen aufgeführten Massnahmen ist eine vorteilhafte Weiterbildung und Verbesserung der im Hauptanspruch angegebenen Anlage möglich. Durch die Ausbildung der Abscheideanlage als Turm mit konzentrisch angeordneten Rohrzylindern wird eine hohe Kapazität an zu speicherndem Öl erzielt, wobei der Zwischenraum zwischen den Zylindern als Ölsammelraum dient.

Dieser Turm kann je nach Auslegung der Anlage tief in den Boden eingelassen werden, um die Kapazität zu erhöhen. Nach dem Prinzip der kommunizierenden Röhren wird der Auslauf des vom Öl getrennten, sauberen Wassers in Höhe des normalen Wasserspiegels angeordnet. Zusätzlich wird gemäss der weiteren Ausgestaltung nach Unteranspruch 2 ein grösserer Entlastungskanal vorgesehen, der bei starkem Wasseranfall zum Einsatz kommt.

Dies gilt sinngemäss auch für nebeneinander angeordneten Ölsammelturm und Ablaufturm, die jedoch einen höheren Platzbedarf haben, jedoch in den Herstellungskosten bei grossen Durchmessern kostengünstiger sind.

Besonders vorteilhaft ist die Ausgestaltung der Erfindung gemäss Unteranspruch 5, wobei durch Verwendung von Normrohren ausserordentlich kostengünstig gefertigt werden kann.

Zur Erhöhung der Kapazität derartiger Anlagen werden diese gemäss der Ausgestaltung nach Unteranspruch 6 in parallel angeordneter Bauweise ausgeführt.

Weitere erfindungsgemässe Einzelheiten und Vorteile sind in dem nachfolgenden Ausführungsbeispiel der Erfindung dargestellt und in der Beschreibung näher erläutert. Es zeigen

Fig. 1 einen Längsschnitt gemäss der Schnittlinie B-B in Fig. 2,

Fig. 2 eine Draufsicht der Anlage gemäss Schnittlinie A-A in Fig. 1,

Fig. 3 eine alternative Ausführung des Turms 23, 38.

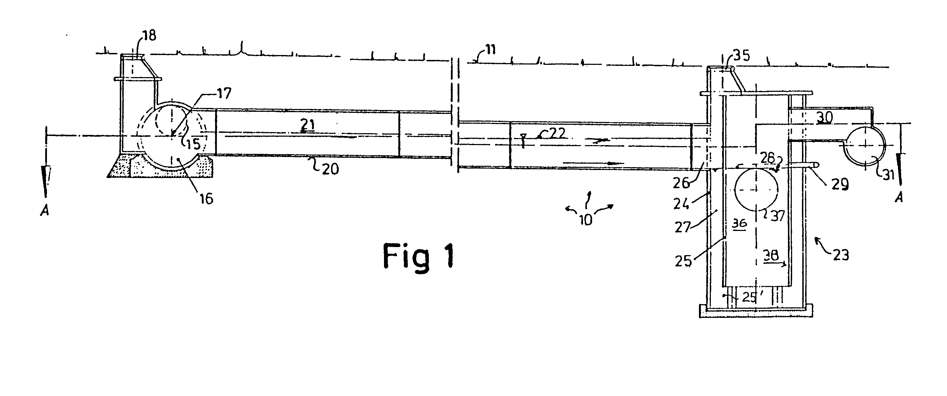

Über ein Verbindungsrohr 15 ist der Einlaufschacht 14 mit einem Sandfang 16 verbunden. Dabei beträgt der Durchmesser des Verbindungsrohrs 15 die Hälfte des Durchmessers des Sandfangs 16, wobei der Zulauf des Verbindungsrohrs 15 in der oberen Hälfte des Sandfangs angeordnet ist. Mit 17 ist die Sole des Verbindungsrohrs in Fig. 1 dargestellt.

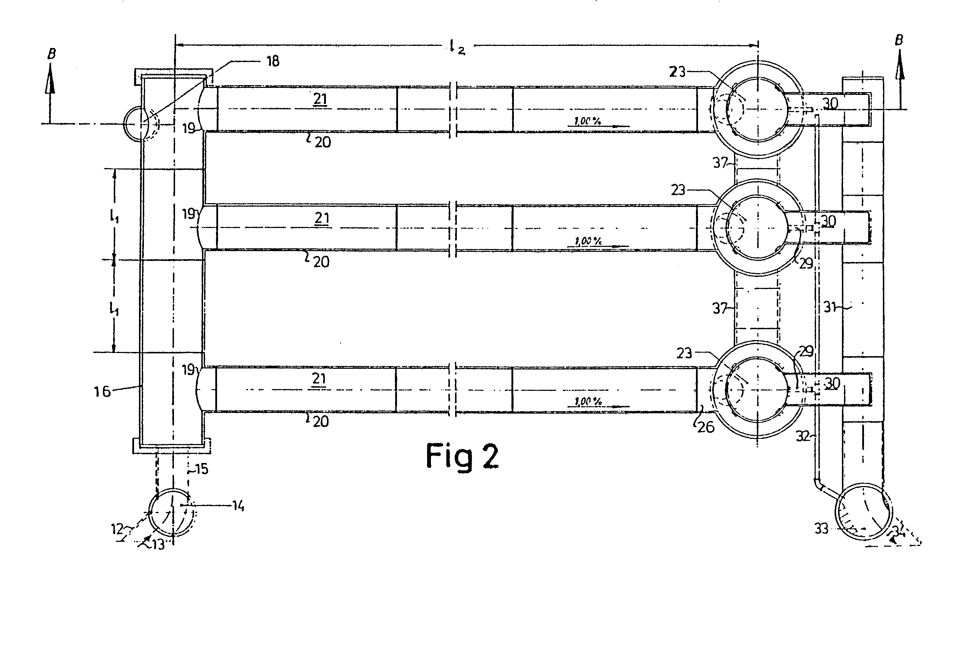

Wie die gesamte Anlage 10 ist auch der Sandfang 16 als rohrförmiges Bauwerk mit einer Nennweite von beispielsweise 2000 mm ausgebildet. Gemäss der Darstellung in Fig. 2 dient der Sandfang 16 gleichzeitig als Verteilerbauwerk zur gleichmässigen Durchströmung der Gesamtanlage sowie zur Absetzung von Grobstoffen. Im Ausführungsbeispiel sind drei erfindungsgemässe Anlagen in Parallelschaltung vorgesehen. In Fig. 2 ist weiterhin mit 18 ein Einstieg-Kontrollschacht für den Sandfang 16 vorgesehen. Die Länge $l_1$ der einzelnen, das Verteilerbauwerk 16 bildenden Rohrabschnitte kann beispielsweise 3 m betragen.

Rechtwinklig zu den horizontal ausgerichteten Rohren des Sandfangs 16 sind Anschlussstutzen 19 für den aus Rohren 20 gebildeten Stauraum 21. Diese Rohre haben im Ausführungsbeispiel eine Nennweite von 1400 mm und sind auf eine Länge $l_2$ von beispielsweise 52 m verlegt, bei einem Gefälle von 1%. Neben der Speicherfähigkeit des Stauraums für grosse Flüssigkeitsmengen, beispielsweise bei einem wolkenbruchartigen Regenschauer, soll der Stauraum auch gleichzeitig ein Absetzen der Schmutzstoffe ermöglichen. Je nach Auslegung der erfindungsgemässen Anlage können mehrere Stauräume mit den entsprechenden übrigen Bauteilen parallel geschaltet werden. Wie in Fig. 1 dargestellt, soll die Bemessung der Gesamtanlage derart erfolgen, dass bei grösstem angenommenem Wasserzufluss (z. B. 500 ltr./sec pro Turm) eine maximale Flüssigkeitshöhe 22 erzielt wird, die etwa ¾ des Durchmessers der Rohre 20 einnimmt.

Dem Stauraum 21 nachgeschaltet ist ein sog. Turm 23, der die eigentliche Trennanlage zwischen Öl und Wasser und Rückhaltung von festen Anteilen im Strassenabwasser darstellt. Um beispielsweise eine Aufnahme und Speicherung von ca. 30 000 l Mineralöl zu gewährleisten, müssten gemäss den im Ausführungsbeispiel dimensionierten Anlagen zwei Türme 23 parallel geschaltet sein. Jeder Turm 23 besteht aus zwei ineinandergestellten Ringen 24, 25 mit einer Bauhöhe von ca. 7 bis 8 m. Die ankommende Wassermenge aus den Stauräumen 21 wird über den Anschlussstutzen 26 dem äusseren Ring 24 zugeführt. Zwischen dem äusseren und dem inneren Ring befindet sich der Speicherraum 27 für das Mineralöl. Durch die senkrechte Bauweise des zylindrischen Turms 23 durchfliesst das Wasser den Turm in vertikaler Richtung, d. h. von oben nach unten und gelangt unter der ca. 70 cm allseitigen Öffnung in den inneren Ring bzw. Zylinder 25. Der innere Ring dient deshalb als Tauchwand zur Abtrennung des Ölraums 27 zwischen dem äusseren und dem inneren Ring. Die Verbindungsleitung 37 in Höhe des normalen Wasserspiegels 28 zwischen den Türmen dient dem Wasserstandsniveauausgleich.

Der Durchmesser des äusseren Rings 24 beträgt im Ausführungsbeispiel 3000, der des inneren Rings 25 2000 mm. Der äussere und der innere Ring 24, 25 sind bis zu der Höhe der unteren Einlaufkante des Stauraums 21 ständig mit Wasser beaufschlagt (Wasserspiegel 28). In dieser Höhe befindet sich auch die Drosselstrecke 29, die als Ableitung vom inneren Bereich 36 des Turms herausführt. Im Regelfall, d. h. bei normaler Regenintensität, wird das ankommende Wasser nur über die Drosselstrecke mit einer Nennweite von beispielsweise 150 mm abgeschlagen. Sollte jedoch ein Katastrophenregen oder ein Regen über den Bemessungsregen hinaus eintreten, so tritt nach Überschreiten des vorgegebenen Stauziels der Entlastungskanal 30 in Funktion. Diese Entlastung hat vor allem zu verhindern, dass über das vorgegebene Stauziel hinaus (Flüssigkeitshöhe 22) Abwasser in der Anlage aufgestaut wird. Es hätte sonst zur Folge, dass aufschwimmendes Öl über die Schachtöffnungen 35 austreten könnte.

Dem Entlastungskanal 30 angeschlossen ist ein weiterer Austrittskanal 31, in welchem auch die Drosselstrecke 30 über eine Leitung 32 einmündet. Ein zusätzlicher Kontrollschacht 33 ist am Ende des Entlastungskanals 30 mit Austrittskanal 31 bzw. der Drosselstrecke 29 angeordnet. Der Auslauf 34 führt über eine Rohrleitung zur Vorflut, d. h. zu einer Abflussmöglichkeit mit natürlichem Gefälle. Die parallel geschalteten Türme 23 sind über eine Leitung 37, die unterhalb des normalen Wasserspiegels 28 liegt, miteinander verbunden.

Die Anlage ist nicht auf das in den Figuren dargestellte Ausführungsbeispiel beschränkt. Prinzipiell sollen auch Abwandlungen, die dem Fachmann ohne erfinderische Überlegungen zur Verfügung stehen, inbegriffen sein. Dies kann beispielsweise eine parallele Anordnung der Stauräume 21 sein, die zu einem gemeinsamen, jedoch in den Dimensionen grösser ausgelegten Turm 23 führen. Weiterhin kann auch eine prismatische Ausgestaltung des Turms vorgesehen sein, wobei eine zylindrische Tauchwand jedoch zweckmässig ist. Auch können mehrere Stauräume 21 zusammengefasst werden, ggf. auch in offener Schalenbauweise.

Zur Vergrösserung des Stauraums 21 kann dieser weiterhin eine andere Formgebung, z. B. ellipsenförmig, aufweisen. Die Verbindung zwischen dem Sandfang 16 und dem Turm 23 kann weiterhin zickzackförmig oder mäanderförmig erfolgen.

Als wirtschaftliche Grundüberlegung ist es jedoch zweckmässig, weitergehend Rohre als Normbauteile zu verwenden, die lediglich unter der Erde verlegt werden müssen, ohne dass grosse Betonarbeiten notwendig sind. Einstiegsschächte bzw. Kontrollschächte 18, 33, 35 dienen der Kontrolle der gesamten Anlage.

In Fig. 3 ist eine alternative Ausführung des Turms 23 dargestellt. Wie zuvor ausgeführt, ist bei konzentrischer Anordnung beispielsweise ein Durchmesser des Turms 23 von 3000 mm erforderlich, was mit hohen Herstellungskosten verbunden ist. Das Kostenverhältnis der Herstellung von Schleuderbetonrohren mit einem Durchmesser von 3000 mm und 2000 mm beträgt derzeit beispielsweise fast 4:1. Demzufolge ist es bei grösseren Anlagen alternativ vorgesehen, den Ölsammelturm 23 und den Ablaufturm 38 gemäss Fig. 3 nebeneinander anzuordnen. Bei gleicher Mengendurchsatzleistung hat dann der Ölsammelturm 23 einen Durchmesser von nur 2000 mm, der Ablaufturm 38 von 1200 mm. Der Platzbedarf ist jedoch entsprechend grösser.

Nach derzeitigen Vorgaben beträgt das einzuspeichernde Ölvolumen beispielsweise 30 m³ für die gesamte Anlage, so dass der einzelne Ölsammelturm 23 entsprechend anteilig zu bemessen ist. Die maximale Durchlaufmenge durch den Ablaufturm 38 konnte beispielsweise auf ca. 550 ltr./sec festgestellt sein, die bei einer maximalen Durchflussgeschwindigkeit von ca. 0,05 m/sec.

Im übrigen sind in Fig. 3 gleiche Teile mit gleichen Bezugszeichen versehen wie in den Figuren 1 und 2.

## Patentansprüche

1. Anlage zur Behandlung von Abwässern von Strassenverkehrsflächen o. dgl., dadurch gekennzeichnet, dass unterhalb des Erdreichs (11) ein vorzugsweise als horizontales Rohr ausgebildeter Sandfang (16) vorgesehen ist, dass sich dem Sandfang (16) ein längerer, mit leichtem Gefälle versehener insbesondere rohrförmiger Stauraum (21) oder Beruhigungsraum anschliesst und dass der Stauraum (21) im oberen Bereich eines vertikal ausgerichteten Ölsammelturms (23) mit zylindrischem oder prismatischem Querschnitt mündet, der über eine Tauchwand (25') zu einem weiteren vertikal ausgerichteten Ablaufturm (25, 38) führt, wobei der Ablaufturm innerhalb des Ölsammelturms (23) oder daneben angeordnet ist.

2. Anlage nach Anspruch 1, dadurch gekennzeichnet, dass die Turmwandung (24) und die Tauchwand (25') durch konzentrisch angeordnete Rohrzylinder gebildet sind, wobei der Zwischenraum (27) als Ölsammelraum dient.

3. Anlage nach Anspruch 1 oder 2, dadurch gekennzeichnet, dass der Innenbereich (36) des Turms (23) in der Höhe der Unterkante des Einlaufstutzens (26) des Stauraums (21) einen als Drosselstrecke (29) ausgebildeten Wasserablaufstutzen mit geringerer Nennweite aufweist und das oberhalb der Höhe der Mittelachse des Einlaufstutzens (26) ein Entlastungskanal (30) mit grösserer Nennweite zum Anschluss an den Innenbereich (36) des Turms (23) vorgesehen ist.

4. Anlage nach einem oder mehreren der Ansprüche 1 bis 3, dadurch gekennzeichnet, dass alle Anlagenteile als Normrohre bzw. Normbauteile unterschiedlichen Durchmessers ausgeführt sind.

5. Anlage nach einem oder mehreren der vorhergehenden Ansprüche, dadurch gekennzeichnet, dass mehrere Anlagen parallel geschaltet sind, wobei das als Sandfang ausgebildete Rohr (16) als die parallel angeordneten Abschnitte verbindendes Verteilerbauwerk ausführbar ist und wobei die parallel angeordneten Türme (23) Querverbindungskanäle (37) aufweisen.

6. Anlage nach einem oder mehreren der vorhergehenden Ansprüche, dadurch gekennzeichnet, dass dem Sandfang bzw. dem Verteilerbauwerk (16) ein Einlaufbauwerk zur Energievernichtung vorgeschaltet ist.

7. Anlage nach einem oder mehreren der vorhergehenden Ansprüche, dadurch gekennzeichnet, dass mehrere parallel geschaltete Stauräume (21) zu einem gemeinsamen Turm (23) geführt werden.

8. Anlage zur Behandlung von Abwässern von Strassenverkehrsflächen, insbesondere nach einem oder mehreren der vorhergehenden Ansprüche 1 bis 7, dadurch gekennzeichnet, dass das ölhaltige Abwasser einem vertikal ausgerichteten Turm (23) zuführbar ist, der aus zwei zylindrischen und/oder prismatischen, vorzugsweise konzentrisch oder nebeneinander angeordneten Rohren (24, 25, 38) besteht, wobei bei konzentrischer Anordnung das innere Rohr (25) als Tauchwand ausgebildet ist.

9. Anlage nach Anspruch 8, dadurch gekennzeichnet, dass der Durchmesser vom Ölsammelturm (23) vom einzuspeichernden Ölvolumen und der des daneben angeordneten Ablaufturms (38) von einer angenommenen maximalen Durchflussmenge sowie der maximal zulässigen Durchflussgeschwindigkeit abhängt.

## Claims

1. Installation for the treatment of waste waters from road traffic surfaces or the like, characterised in that beneath the ground (11) there is provided a sand trap (16) formed preferably as a horizontal pipe, in that the sand trap (16) is adjoined by a longer, especially tubular, damming chamber (21) or stilling chamber provided with a slight gradient and in that the damming chamber (21) opens in the upper region of a vertically oriented oil-collecting tower (23) with cylindrical or prismatic cross-section which leads by way of a baffle (25') to a further vertically oriented drain tower (25, 38), the drain tower being arranged within or beside the oil-collecting tower (23).

2. Installation according to Claim 1, characterised in that the tower wall (24) and the baffle (25') are formed by concentrically arranged pipe cylinders, the interspace (27) serving as oil-collecting chamber.

3. Installation according to Claim 1 or 2, characterised in that the interior region (36) of the tower (23) comprises, at the level of the lower edge of the entry pipe (26) of the damming chamber (21), a water outlet pipe with smaller nominal width, formed as constriction path (29), and in that above the level of the central axis of the entry pipe (26) a relief passage (30) with greater nominal width is provided, for connection to the interior region (36) of the tower (23).

4. Installation according to one or more of Claims 1 to 3, characterised in that all parts of the installation are made as standard pipes or standard components of different diameters.

5. Installation according to one or more of the preceding Claims, characterised in that several installations are connected in parallel, the pipe (16) formed as sand trap can be made as a distributor structure connecting the sections arranged in parallel and the towers (23) arranged in parallel comprise transverse connection passages (37).

6. Installation according to one or more of the preceding Claims, characterised in that the sand trap or the distributor structure as the case may be is preceded by an entry structure for energy dissipation.

7. Installation according to one or more of the preceding Claims, characterised in that several damming chambers (21) connected in parallel are conducted to one common tower (23).

8. Installation for the treatment of waste waters from road traffic surfaces, especially according to one or more of the preceding Claims 1 to 7, characterised in that the oil-containing waste water can be fed to a vertically oriented tower (23) which consists of two cylindrical and/or prismatic pipes (24, 25, 38) preferably arranged concentrically or side by side, the inner pipe being made as a baffle in the case of concentric arrangement.

9. Installation according to Claim 8, characterised in that the diameter of the oil-collecting tower (23) is dependent upon the volume of oil to be stored and that of the drain tower (38) arranged therebeside is dependent upon an assumed maximum throughflow quantity and the maximum permissible speed of throughflow.

**Revendications**

1. Installation pour le traitement des eaux rejetées par des surfaces de trafic routier ou autres de ce genre, caractérisée en ce qu'il est prévu, en dessous du niveau du sol (11), un capteur de sable (16) réalisé sous la forme d'un tuyau, horizontal de préférence, qu'il est raccordé au capteur de sable (16), une chambre de retenue (21) plus longue, pourvue d'une légère pente, en particulier tubulaire, ou chambre de repos, et que cette chambre de retenue (21) débouche dans la zone supérieure d'une tour de collecte de l'huile (23) dressée verticalement, dont la section transversale est cylindrique ou prismatique, qui conduit, en passant par une cloison de retenue (25') à une autre tour d'évacuation (25, 38) dressée verticalement, cette tour d'évacuation étant placée à l'intérieur de la tour de collecte de l'huile (23), ou à côté d'elle.

2. Installation suivant la revendication 1, caractérisée en ce que la paroi de la tour (24) et la cloison de retenue (25') sont formées par des cylindres tubulaires disposés concentriquement, l'espace intermédiaire (27) servant de chambre de collecte de l'huile.

3. Installation suivant l'une des revendications 1 ou 2, caractérisée en ce que la zone intérieure (36) de la tour (23) porte, à la hauteur du bord inférieur de l'ajutage d'entrée (26) de la chambre de retenue (21), un raccord d'évacuation d'eau réalisé sous la forme d'un parcours d'étranglement (29) dont la section nominale est assez petite, et qu'au-dessus de la hauteur de l'axe central de l'ajutage d'entrée (26), il est prévu un canal de décharge (30) dont la section nominale est plus grande, pour le raccordement à la zone intérieure (36) de la tour (23).

4. Installation suivant l'une des revendications 1 à 3, caractérisée en ce que toutes les parties de l'installation sont réalisées sous forme de tuyaux normalisés ou de parties de construction normalisées, de différents diamètres.

5. Installation suivant une ou plusieurs des revendications précédentes, caractérisée en ce que plusieurs installations sont placées parallèlement, le tube (16), réalisé sous forme de capteur de sable pouvant être réalisé sous la forme d'un ouvrage distributeur reliant les sections disposées parallèlement, les tours (23), disposées en parallèle comportant des canaux (37) de liaison transversale.

6. Installation suivant une ou plusieurs des revendications précédentes, caractérisée en ce qu'il est placé, en avant du capteur de sable et de l'ouvrage répartiteur (16), un ouvrage d'entrée pour annihiler l'énergie.

7. Installation suivant une ou plusieurs des revendications, caractérisée en ce que plusieurs chambres de retenue (21) montées en parallèle, conduisent à une tour commune (23).

8. Installation pour le traitement d'eaux usées de surfaces de trafic routier, en particulier suivant une ou plusieurs des revendications 1 à 7, caractérisée en ce que les eaux contenant de l'huile sont envoyées à une tour construite verticalement (23) qui est constituée de deux tuyaux (24, 25, 38) placés de préférence concentriquement ou à côté l'un de l'autre, cylindriques et/ou prismatiques, le tuyau intérieur (25) étant réalisé, dans la disposition concentrique sous forme de cloison de retenue.

9. Installation suivant la revendication 8, caractérisée en ce que le diamètre de la tour (23) de collecte de l'huile dépend du volume d'huile à emmagasiner et celui de la tour d'évacuation (38), placée à côté de la précédente, dépend du débit maximum de passage admissible, ainsi que de la vitesse d'écoulement maximum admissible.

Fig 1

Fig 2

Fig 3